# EUROPEAN PATENT APPLICATION

(11) **EP 4 468 265 A2**
(43) Date of publication of application: **27.11.2024**
(21) Application number: 24173109.0
(22) Date of filing: 29.04.2024
(51) Int. Cl.: G08B 7/06

(54) **EVENT SYSTEM INTEGRATION FOR EVENT RESPONSE**

(30) Priority: 23.05.2023 US 202318200816
(71) Applicant: Honeywell International Inc., Charlotte, NC 28202 (US)
(72) Inventor: UDAYASHANKAR, Poshith, Charlotte, 28202 (US); NALUKURTHY, Rajesh Babu, Charlotte, 28202 (US); SRIVASTAVA, Anushka, Charlotte, 28202 (US); E K, Vipin Das, Charlotte, 28202 (US); THANGARAJAN, Uvaraj, Charlotte, 28202 (US)
(74) Representative: Haseltine Lake Kempner LLP

(57) **Abstract**

Devices, systems, and methods for event system integration for event response are described herein. In some examples, one or more embodiments include a computing device comprising a memory and a processor to execute instructions stored in the memory to receive building system information from a building management system of a facility and emergency services information from at least one of a mobile device and a remote computing device, determine whether an event has been detected via an event device in the facility from the building system information, generate an event response analysis using at least one of the building system information based on the detected event and the emergency services information, and transmit the event response analysis to the mobile device.

## Description

### Technical Field

The present disclosure relates to devices, systems, and methods for event system integration for event response.

### Background

Facilities, such as commercial facilities, office buildings, hospitals, campuses (e.g., including buildings and outdoor spaces), and the like, may have an event system that can be triggered during an event, such as an emergency situation (e.g., a fire) to warn occupants to evacuate. Such an event system may include a alarm system having a control panel and a number of event devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of event devices may provide a notification of the event to the occupants of the facility via alarms and/or other mechanisms.

### Brief Description of the Drawings

Figure 1 is an example of a system for event system integration for event response, in accordance with one or more embodiments of the present disclosure.
Figure 2 is an example of an event map analysis for event system integration for event response, in accordance with one or more embodiments of the present disclosure.
Figure 3 is an example of navigation information on a map of a facility for event system integration for event response, in accordance with one or more embodiments of the present disclosure.
Figure 4 is an example of navigation information in a system for event system integration for event response, in accordance with one or more embodiments of the present disclosure.
Figure 5 is an example of a computing device for event system integration for event response, in accordance with one or more embodiments of the present disclosure.

### Detailed Description

Devices, systems, and methods for event system integration for event response are described herein. In some examples, one or more embodiments include a computing device comprising a memory and a processor to execute instructions stored in the memory to receive building system information from a building management system of a facility and emergency services information from at least one of a mobile device and a remote computing device, determine whether an event has been detected via an event device in the facility from the building system information, generate an event response analysis using at least one of the building system information based on the detected event and the emergency services information, and transmit the event response analysis to the mobile device.

A facility can utilize an event system in order to warn occupants of the facility of an emergency event, such as a fire. An event system can be a system of devices that operate to collect information about a facility and provide the collected information for analysis. Such an event system can also take actions based on the collected information, such as providing an audible and/or visible warning in an emergency event. For example, the event system can utilize event devices to warn occupants of the emergency event occurring in the space, such as a fire. As used herein, the term "event device" refers to a device that can receive an input relating to an event and/or generate an output relating to an event. Such event devices can be a part of the event system of a space in a facility/in the facility at large and can include devices such as fire sensors, smoke detectors, heat detectors, carbon monoxide (CO) detectors, or combinations of these; air quality sensors; interfaces; manual call points (MCPs); pull stations; input/output modules; aspirating units; and/or audio/visual devices (e.g., speakers, sounders, flashers, buzzers, microphones, cameras, video displays, video screens, etc.), relay output modules, among other types of event devices.

If an event occurs in the facility, in addition to event devices warning occupants of the event, emergency service personnel may also respond to the event. Emergency service personnel, such as fire fighters, medical technicians, and/or police may respond to the event in the facility to address the event (e.g., put out a fire), assist persons at the facility who may be injured, assist in evacuation of the facility, etc.

However, when emergency service personnel respond to an event at a facility, such emergency service personnel may only have a short description of the event. For example, in the event of a fire, emergency service personnel may only have a description that there is a fire in the facility. However, such emergency service personnel may not be informed of the scale of the fire, whether the fire has grown since the fire was detected and/or reported, the size of the facility, the number of occupants in the facility, the type of facility, if there are dangerous materials in the facility, etc. Additionally, there may not be any contact between a facility manager for the facility and the emergency service personnel until the emergency service personnel arrive at the facility. Accordingly, communication with the emergency service personnel may be lacking.

Additionally, different emergency service personnel can perform different roles when at the facility. For example, within a group of firefighters responding to the facility, one sub-group can be an engine company, another sub-group can be a ladder company, etc. Such different sub-groups of emergency service personnel may utilize different information in order to address the fire. However, there is no solution that allows for automatically parsing information about the event occurring for the sub-groups and transmitting it to the correct emergency service personnel. Such delays in transmitting information can lead to dangerous situations for occupants, emergency service personnel, etc. For example, emergency service personnel may not know about trapped occupants in the facility until persons who have evacuated are counted and compared against a total number of people in the facility prior to the event. Additionally, emergency service personnel within the facility may be injured or become trapped (e.g., while addressing the event, saving trapped occupants, etc.), and such information may be delayed in transmission to other emergency service personnel, losing precious time for rescue operations.

Further, in previous approaches, emergency service personnel utilized routing cards in order to locate an event device in the facility that detected the event. As used herein, the term "routing card" refers to a physical media having directions from an initial location to a location of an event device in a facility. The routing card can be an object specific map that can enable a user (e.g., such as a fire department, building manager, maintenance personnel, etc.) to navigate from the stored location of the routing card to a particular event device in the facility. In addition to the map, the routing card may include other information about the facility and the event device itself.

A routing card can be generated and stored for each event device in the facility. For example, first event device on a first floor of a facility may have one routing card with information about the facility, information about the first event device on the first floor, as well as map and routing information to the first event device. Similarly, a second event device on a fifth floor of the facility may have a different routing card with information about the facility, information about the second event device, as well as map and routing information to the second event device. In the facility, there may be a large number of event devices. Accordingly, the number of routing cards may also be large.

When an event is detected, a user can determine which event device detected the event (e.g., via a control panel for the event system), locate a routing card associated with the event device, and utilize the routing card to navigate to and locate the event device in the facility. In certain jurisdictions, such routing cards may be mandated so that they are available for emergency services to utilize. However, as mentioned above, if there are many routing cards, it may take time for a user to locate a particular routing card. In an emergency situation, locating the particular routing card may take time that may otherwise be spent addressing the emergency situation (e.g., fighting a fire, assisting an injured person, etc.).

Additionally, routes on the routing cards may take emergency service personnel through an area of the facility that has dangerous environmental conditions (e.g., as a result of the event occurring). For example, a routing card may cause emergency service personnel to travel through an area of the facility having high smoke concentrations, toxic gas, other fires occurring, etc. on their way to locating the event detected by the event device.

Event system integration for event response according to the disclosure can allow for an event response analysis to be performed and transmitted to a mobile device of an emergency service person. Such an event response analysis can provide up to date and accurate information about an event as the event evolves (e.g., as a fire grows, as occupants evacuate, etc.). Such analysis can be tailored to a particular role of an emergency service person (e.g., type of firefighter, medical technician, police, etc.), can inform emergency service personnel about developments (e.g., an occupant or an emergency service person is injured or becomes trapped), and can provide navigation information to provide short, efficient, and safe routes to areas in the facility, while avoiding dangerous areas if possible. Accordingly, information about an event can be quickly and efficiently transmitted to emergency service personnel in a tailored fashion, allowing for a faster and safer approach to event response, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

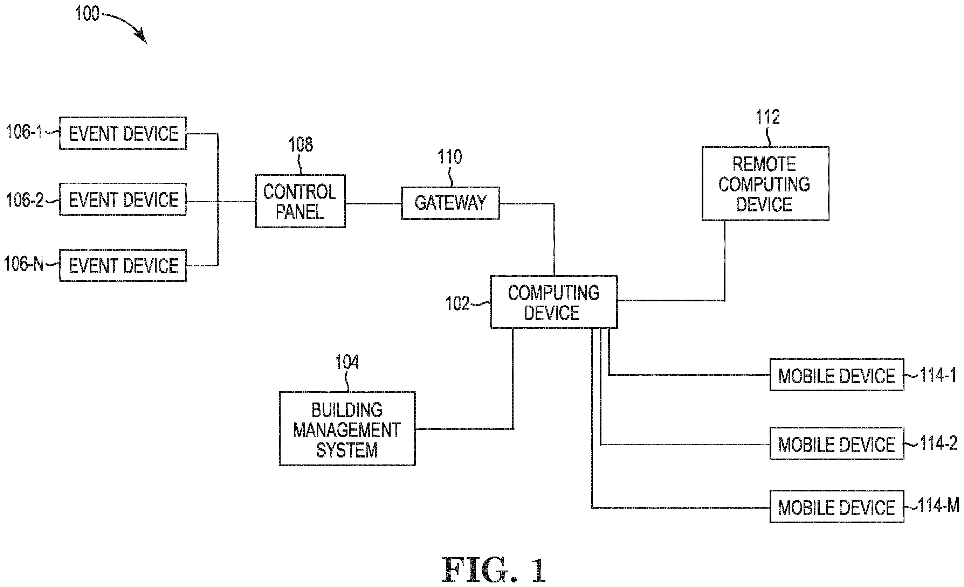

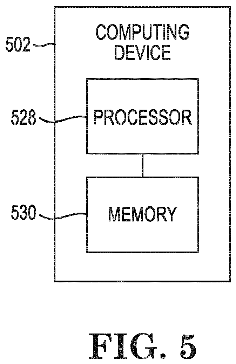

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 502 in Figure 5.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for event system integration for event response, in accordance with one or more embodiments of the present disclosure. The system 100 can include a computing device 102, a building management system 104, event devices 106-1, 106-2, 106-N, a control panel 108, a gateway 110, a remote computing device 112, and mobile devices 114-1, 114-2, 114-M.

As mentioned above, the system 100 can be included in a facility, a space in a facility, etc. The system 100 can include a device/series of devices in order to detect events and/or process and/or analyze the detected events to determine whether to generate an alarm for occupants of the facility.

For example, the system 100 can include event devices 106-1, 106-2, 106-N (referred to collectively as event devices 106). The event devices 106 can be devices to detect an event and transmit the detected event for processing and/or analysis. As mentioned above, the event devices 106 can include, for example, cameras, motion sensors, fire sensors, smoke detectors, heat detectors, carbon monoxide (CO) detectors, or combinations of these; air quality sensors; interfaces; manual call points (MCPs); pull stations; input/output modules; aspirating units; sprinkler controls; and/or audio/visual devices (e.g., speakers, microphones, cameras, video displays, video screens, etc.), relay output modules, among other types of event devices.

The system 100 can further include a control panel 108. The control panel 108 can be utilized to control the various event devices 106 included in the system 100.

The control panel 108 can be connected to the event devices 106 and to a gateway 110. The gateway 110 can be a device (e.g., a building system gateway) that provides a communication link between the control panel 108 and the computing device 102. For example, the gateway 110 may enable transmission of data (e.g., system device data, activation signals, etc.) from the event devices 106 to the computing device 102 via the control panel 108 and vice versa.

The facility can further include a building management system 104. As used herein, the term "building management system" refers to a computing-based automation and control system utilized in a facility to monitor, regulate, and/or control the facility's electrical and mechanical equipment, including power, lighting, and ventilation, among other types of equipment in a facility. The building management system 104 can utilize a building information model having data associated with a facility (e.g., data associated with components, equipment, and/or properties of the facility). For example, building information model data can include architectural, mechanical, electrical, plumbing, sanitary, fire, and/or geometrical information associated with a building via various floor plans of the facility, and can be represented in two-dimensional (2D) plans and/or three-dimensional (3D) plans.

Additionally included in the system 100 are mobile devices 114-1, 114-2, 114-M (referred to collectively as mobile devices 114). The mobile devices 114 may be utilized by occupants of the facility, may be mobile devices utilized by emergency service personnel, or by others. Accordingly, some of the mobile devices 114 may be located at the facility, but some of the mobile devices 114 may be located external to the facility, but may transit to the facility if an event occurs, as is further described herein.

As illustrated in Figure 1, the system 100 can further include a remote computing device 112. The remote computing device 112 can be a standalone computing device, a computing system, a cloud computing platform, etc. that is remotely located from the facility. The remote computing device 112 can be, for example, a computing device utilized by a dispatch center for emergency services. For instance, a person can dial an emergency telephone number, and such a call may be routed to the dispatch center having the remote computing device 112. The dispatch center can accordingly dispatch emergency service personnel. In another example, a signal can be automatically transmitted to the remote computing device 112 (e.g., from the computing device 102) if an event is detected. In such an example, the dispatch center can dispatch emergency service personnel even if no person has dialed an emergency telephone number in regards to the event.

As illustrated in Figure 1, the event devices 106 can be connected to the computing device 102 (e.g., via the control panel 108 and gateway 110). Additionally, the building management system 104, the remote computing device 112, and the mobile devices 114 can be connected to the computing device 102. Such devices can be connected via a network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

As used herein, the term "computing device" refers to an electronic system having a processing resource, memory resource, and/or an application-specific integrated circuit (ASIC) that can process information. Examples of computing devices can include, for instance, a laptop computer, a notebook computer, a desktop computer, an All-In-One (AIO) computing device, a server, networking equipment (e.g., router, switch, etc.), and/or a mobile device, among other types of computing devices. As used herein, a mobile device can include devices that are (or can be) carried and/or worn by a user. For example, a mobile device can be a phone (e.g., a smart phone), a tablet, a personal digital assistant (PDA), smart glasses, and/or a wrist-worn device (e.g., a smart watch), among other types of mobile devices.

The computing device 102 can receive information from the various devices illustrated in Figure 1. For example, the computing device 102 can receive building system information from the building management system 104 and emergency services information from the remote computing device 112 and/or at least one of the mobile devices 114, as is further described herein.

The computing device 102 can receive building system information from the building management system 104. The building system information can include, for example, control and/or monitoring data relating to the facilities electrical and mechanical equipment, floor plan information for the facility, and/or any other information included in the building information model and/or as part of the building management system 104, as mentioned above and as is further described herein.

Additionally, the computing device 102 can receive emergency services information. Such emergency services information can be received from, for example, the remote computing device 112 and/or from mobile devices 114 associated with emergency services personnel during an event response.

For example, mobile devices 114-2 and 114-M may be associated with emergency response personnel responding to an event at the facility. The mobile devices 114-2 and 114-M may transmit information to the computing device 102, such as a real-time location of the mobile devices 114-2, 114-M during transit to the facility, a real-time location of the mobile devices 114-2, 114-M while at the facility, physiological data of a user of the mobile device 114-2 and/or 114-M, fall/impact detection for the emergency services personnel having the mobile devices 114-2, 114-M, an ambient temperature of a space in which the mobile devices 114-2, 114-M are located, as well as identifying information (e.g., an identifier, such as a serial number, media access control (MAC) address, etc.) for the mobile devices 114-2, 114-M (e.g., for a count of the mobile devices at or in the facility), and/or any other emergency services information as is further described herein.

While the mobile devices 114-2, 114-M are described as being associated with emergency services personnel (e.g., and while the mobile device 114-1 may be associated with a user at the facility, such as a facility manager), embodiments of the present disclosure are not so limited. For example, the mobile devices 114 may all be associated with emergency services personnel. Alternatively, mobile device 114-1 may be associated with a facility manager, mobile device 114-2 may be associated with an occupant of the facility (e.g., a worker), mobile device 114-M may be associated with an emergency services person, etc.

The remote computing device 112 can also transmit information to the computing device 102. For example, in response to an event, the remote computing device 112 can transmit an amount of emergency services personnel responding to the facility for the event, contact information for users having the mobile devices (e.g., names of emergency service personnel having mobile devices 114-2, 114-M, phone numbers for the mobile devices 114-2, 114-M, etc.), etc. Such information can be transmitted between the remote computing device 112 and the computing device 102 via an application programming interface (API).

The computing device 102 can receive a signal from an event device (e.g., event device 106-1) in the facility. For example, the event device 106-1 may have detected a concentration of smoke that exceeds a threshold amount, and transmits a signal (via the control panel 108 and gateway 110) to the computing device 102. Such a signal may be received via the building system information.

The computing device 102 can determine whether an event has been detected via the event device 106 in the facility from the building system information. For example, the computing device 102 can determine whether the event has been detected by the event device 106-1 by verifying, in response to the signal being received, an alarm state of the event device.

In some examples, the computing device 102 can verify the alarm state of the device by determining the alarm state exists based on the signal being received from the event device 106-1. In some examples, the computing device 102 can verify the alarm state by a user having the mobile device 114-1 transit to the location of the event device 106-1, verifying the alarm state (e.g., the alarm has activated an audible or visible output), and confirming the alarm state by transmitting (e.g., via the mobile device 114-1) a confirmation signal to the computing device 102.

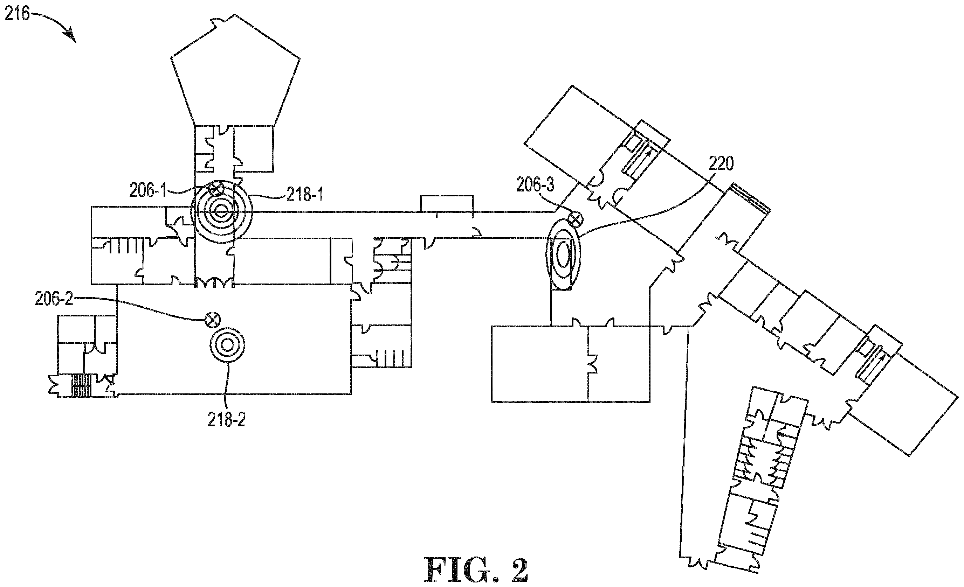

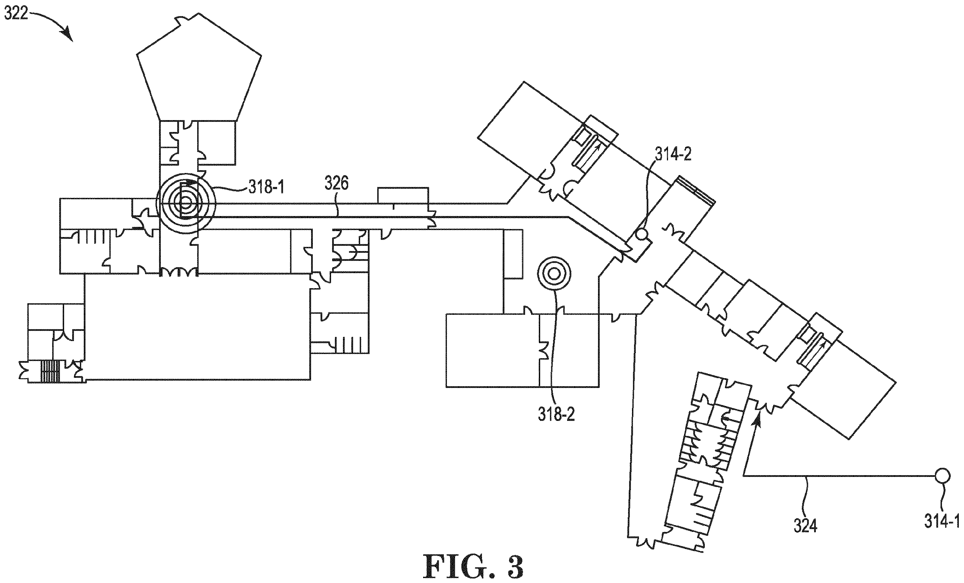

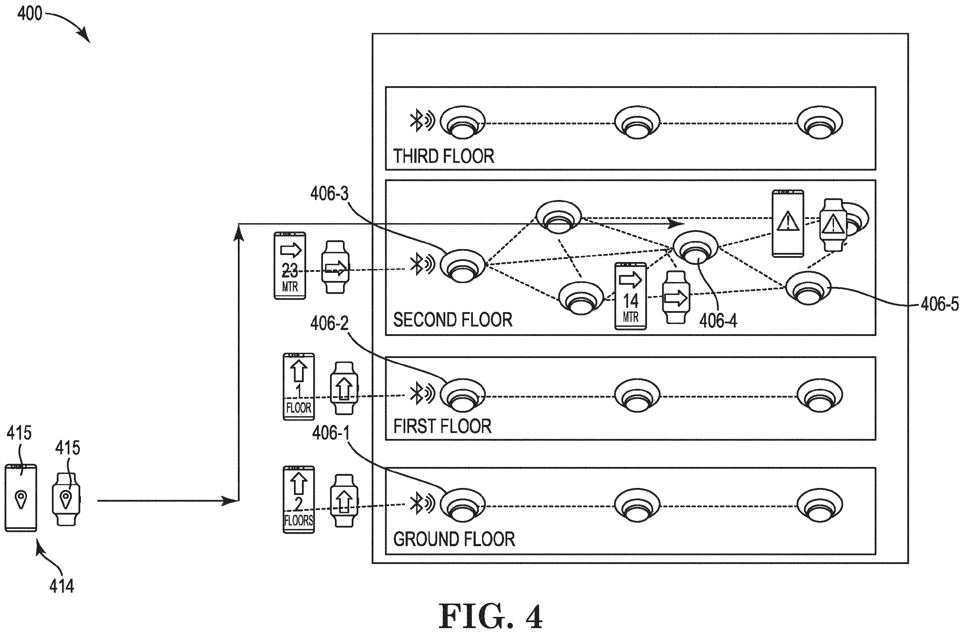

The computing device 102 can generate an event response analysis using the building system information based on the detected event and/or the emergency services information. The computing device 102 can generate the event response analysis in response to the alarm state being verified. The event response analysis can be, for example, information that can be utilized by users to address the event occurring in the facility, as is further described herein. The event response analysis can include, for example, an event map analysis (e.g., as is further described in connection with Figure 2), navigation information associated with the facility (e.g., as is further described in connection with Figures 3 and 4), physiological data analysis, impact detection analysis, a count of the amount of mobile devices at the facility and their respective locations (e.g., in transit to or in the facility), a criticality of space, and/or connections to the public address/voice alarm and/or camera feeds of the facility, as is further described herein.

As mentioned above, the computing device 102 can receive emergency services information from mobile devices 114. For example, users having the mobile devices 114-2, 114-M may be emergency service personnel at the facility responding to the event. The mobile devices 114-2, 114-M can transmit physiological data of the user to the computing device 102. Physiological data can be information about an individual's body functions. Such physiological data can include, for instance, a heart rate, blood pressure, respiration rate, body temperature, blood oxygen saturation, body movement, body activity, and/or any other physiological data that can be determined by the mobile devices 114-2, 114-M for their corresponding users.

Utilizing the physiological data included in the received emergency services information, the computing device 102 can generate the event response analysis by generating a physiological data analysis for users associated with the mobile devices 114-2, 114-M. The physiological data analysis can be utilized by emergency service supervisors, medical personnel, or others to monitor the physiological data of users responding to the event. The physiological data analysis may be utilized to prevent injury or death of the monitored users by having such users reduce their work rate, evacuate the facility, or take other actions prior to injury or death occurring. Supervisors and/or medical personnel may direct users to take such preventative actions based on the physiological data analysis.

The computing device 102 can receive emergency services information additionally including signals from the mobile devices 114 relating to impact detection. For example, the mobile devices 114 may include impact sensors that can detect when debris has impacted a user, the user has fallen, etc. Additionally, the mobile devices 114 may include pre-impact sensors that can detect movement prior to an impact occurring. Such data may be utilized to determine whether an impact and/or a fall has been experienced by a user of a mobile device 114. The mobile devices 114 can transmit impact data of the user to the computing device 102.

Utilizing the impact data included in the received emergency services information, the computing device 102 can generate the event response analysis by generating an impact detection analysis for a user associated with a mobile device 114 in response to the mobile device 114 detecting an impact. The impact detection analysis can be utilized by emergency service supervisors, medical personnel, or other emergency service personnel to determine whether a user of a mobile device 114 has experienced an impact. Other personnel can be directed to assist and/or evacuate the user who has experienced the impact, and medical personnel can be ready to assist in providing care to such a user.

The computing device 102 can receive emergency services information additionally including a count of the mobile devices 114 at the facility and a location of each mobile device 114 at the facility. For example, the mobile devices 114 can transmit identification information to identify each mobile device 114-1, 114-2, 114-M at the facility. Utilizing the count of the mobile devices 114 included in the received emergency services information, the computing device 102 can generate the event response analysis by generating a count (e.g., 3 mobile devices) at the facility. Such data may be utilized by a supervisor to ensure that all emergency service personnel, occupants, or otherwise are accounted for. Additionally, utilizing the location of the mobile devices 114 included in the received emergency services information, the computing device 102 can generate the event response analysis by determining a location of each of the mobile devices 114 at the facility.

In some examples, a mobile device 114-2 may be utilized as part of an emergency response vehicle (e.g., a fire engine), and as such the location of the mobile device 114-2 can correspond to the location of the fire engine. Such an approach can allow for the real-time location tracking of the responding emergency service personnel, and can be utilized to determine how far away the emergency service personnel are from the facility (e.g., after dispatch for an event response) and an estimated time the emergency service personnel are to arrive.

In some examples, the mobile device 114-2 may be associated with a particular user (e.g., emergency service personnel) in the facility during an event response. Having the location of the mobile device 114-2 (e.g., and by extension, the user), and the locations of other mobile devices 114 in the facility can allow for tracking of the locations of the users in the facility. If a user were to become trapped, injured, etc., the locations of the mobile devices 114 of the users' can allow for other emergency service personnel to locate the trapped or injured users, allowing for a fast and efficient response.

As mentioned above, the computing device 102 can receive building system information from the building management system 104 and emergency services information from the mobile devices 114. Utilizing such information, the computing device 102 can generate an event response analysis including a criticality of a space using the building system information and the emergency services information. Criticality of a space can be a measure of a degree to which a space is dangerous for an occupant. The criticality of a space can be determined by the computing device 102 to be too dangerous for a user to be located in. As mentioned above, the computing device 102 can determine the criticality of a space in the facility by utilizing building system information from the building management system 104, including measured parameters/measurements such as a temperature of the space (e.g., from a heat detector in the space), smoke concentrations in the space (e.g., from a smoke detector in the space), indoor air quality (IAQ) in the space (e.g., which can measure relative humidity, carbon dioxide, volatile compound concentrations, etc.), among other sensors. Additionally, in some examples, the computing device 102 can determine the criticality of the space in the facility by utilizing measurements from the mobile devices 114 that may be located in the space, including measured parameters such as temperature of the space, smoke concentrations, IAQ, and/or any other sensors which may be associated with the mobile devices 114 located in the space. The computing device 102 can utilize such above information to determine the criticality of the space to be critical (e.g., and that persons in the space should evacuate) in response to any one of the above parameters exceeding a threshold, a combination of any one of the above parameters exceeding a threshold, and/or any one or any combination of the above parameters exceeding a threshold and data being correlated between the building system information and the emergency services information (e.g., the temperature measured by a mobile device 114-1 being within a threshold range of the temperature detected by the heat detector).

Generating the event response analysis by the computing device 102 can include providing a connection to a public address/voice alarm (PA/VA) system of the facility to the mobile devices 114. For example, the computing device 102 can facilitate a connection between the PA/VA system in the facility so that a user of a mobile device 114-2 can broadcast a message to the facility via the PA/VA system utilizing the mobile device 114-2. For example, a user of the mobile device 114-2 can speak into the mobile device 114-2 a message to evacuate the facility utilizing a predetermined route that avoids the location of the event in the facility, and the message can be broadcast to the occupants of the facility utilizing the PA/VA system in the facility.

Similarly, generating the event response analysis by the computing device 102 can include providing a connection to a camera feed of the facility to the mobile devices 114. For example, the computing device 102 can facilitate a connection between the camera feeds in the facility so that a user of a mobile device 114-2 can view any of the cameras in the facility. A user may review the camera feed in order to verify an event, a type of the event, severity of the event, location of the event, whether any occupants are in the facility, the locations of the occupants, determine a route to the event and/or occupants, etc.

Generating the event response analysis can include providing contact information associated with each mobile device 114. The computing device 102 can receive the contact information from the mobile devices 114 and/or from the remote computing device 112. Accordingly, the event response analysis can include the names of the users' of the mobile devices 114, phone numbers for the mobile devices 114, etc. Such information may be utilized in order to contact a user of a mobile device 114.

Generating the event response analysis can include providing building plans for the facility from the building system information. The computing device 102 can receive the building plans via the building system information provided by the building management system 104. The building plans can include information from the building information model data, such as architectural, mechanical, electrical, plumbing, sanitary, fire, and/or geometrical information associated with a building via various floor plans of the facility, and can be represented in two-dimensional (2D) plans and/or three-dimensional (3D) plans. The event response analysis can include the building plans for the facility, and may be utilized by users of the mobile devices 114 to generate a plan to address the event.

The computing device 102 can transmit the event response analysis to the mobile devices 114. For example, the event response analysis, including the event map analysis, navigation information, physiological data analysis, impact detection analysis, count and location of each mobile device 114, criticality of a space, connection to the PA/VA system of the facility, the connection to the camera feed of the facility, contact information for each of the mobile devices 114, and/or the building plans and/or any other component of the event response analysis can be transmitted to one, multiple, or all of the mobile devices 114, as is further described herein.

The computing device can transmit a portion of the event response analysis to a sub-group of the mobile devices 114. The portion of the event response analysis can be transmitted based on permission levels of identities associated with users of the mobile devices 114. For example, mobile device 114-2 can be a mobile device associated with a user who is an emergency response person/fire fighter in a ladder company, and mobile device 114-M can be a mobile device associated with a user who is an emergency response person/captain fire fighter. As mentioned above, each of the mobile devices 114 can transmit identifying information, such as a device serial number and an identity (e.g., such as a username). The mobile devices 114 can include permission levels associated with the identities of each of the users of the mobile devices 114. For example, the identity associated with the user of the mobile device 114-2 can include permission levels associated with being included in the ladder company, and the identity associated with the user of the mobile device 114-M can include permission levels associated with being a captain. The permission levels can allow for the mobile devices 114 to receive tailored information according to the role the users' are performing at the facility, as is further described herein.

For example, mobile device 114-2 can belong to a first sub-group of mobile devices having permission levels associated with users who are in a ladder company, and mobile device 114-M can belong to a second sub-group of mobile devices having permission levels associated with users who are captains. The computing device 102 can transmit a portion of the event response analysis to mobile device 114-2 and other mobile devices in the first sub-group based on the permission level of the identity associated with a user of the mobile device 114-2/identities associated with users of other mobile devices in the first sub-group. Similarly, the computing device 102 can transmit a portion of the event response analysis to mobile device 114-M and other mobile devices in the second sub-group based on the permission level of the identity associated with a user of the mobile device 114-M/identities associated with users of other mobile devices in the second sub-group.

For instance, the computing device 102 can transmit a portion of the event response analysis to the first sub-group having mobile device 114-2, the portion of the event response analysis including the event map analysis, navigation information, connection to the PA/VA system and the camera feed, contact information for the mobile devices in the first sub-group, and the building plans. The mobile devices 114 in the first sub-group can receive the event response analysis and display the event response analysis on a user interface of the mobile devices 114. Accordingly, the users in the ladder company (e.g., having mobile devices 114 in the first sub-group) can utilize the information tailored to their roles as ladder company users to efficiently and safely address the event in the facility.

Additionally, the computing device 102 can transmit a portion of the event response analysis to the second sub-group having mobile device 114-M, the portion of the event response analysis including the event map analysis, physiological data analysis, impact detection analysis, count and location of each mobile device 114, criticality of a space, connection to the PANA system of the facility, the connection to the camera feed of the facility, and contact information for each of the mobile devices 114. The mobile devices 114 in the second sub-group can receive the event response analysis and display the event response analysis on a user interface of the mobile devices 114. The user (e.g., the captain) (e.g., having a mobile device 114-M in the second sub-group) can utilize the information tailored to their role as captain to oversee and direct the other emergency service personnel in and around the facility to efficiently an safely address the event.

As mentioned above, the event response analysis can further include an event map analysis, and navigation information. The event map analysis is further described in connection with Figure 2, and the navigation information is further described in connection with Figures 3 and 4.

Figure 2 is an example of an event map analysis 216 for event system integration for event response, in accordance with one or more embodiments of the present disclosure. The event map analysis 216 can include event devices 206, hot spots 218, and/or a heat map 220 of occupant movements.

As previously described in connection with Figure 1, a computing device in the facility can receive building system information from a building management system. Utilizing such information, the computing device can generate an event map analysis associated with the event. The event map analysis can be a measure of a degree of activity in the facility, and can include marked hot spots, heat maps of occupant movement, and/or evacuation process updates, as is further described herein.

The event map analysis can include marked hot spots 218-1, 218-2 determined using the building system information. For example, the marked hot spot 218-1 can be a hot spot associated with the event detected by an event device 206-1. The marked hot spot 218-1 can include a severity indicated in Figure 2 by an increasing amount of concentric circles. For example, the building system information may include the temperature detected by the event device 206-1 to exceed one or more threshold temperature values (e.g., a third threshold value). As a result of the detected temperature exceeding a first, a second, and a third threshold temperature value, the size of the marked hot spot 218-1 can be larger than if the detected temperature exceeded a first and a second threshold temperature value, but not a third. In some examples, the computing device can verify the severity of the event indicated by the marked hot spot 218-1 by comparing temperature values (or other data) collected by a mobile device of a user who is located within a threshold distance of a location at which the event is occurring (e.g., within a threshold distance of the event device 206-1), if such data from the mobile device is available. Such verification can increase the accuracy of the event map analysis.

While the more concentric circles at the hot spot 218-1 are indicative of a more severe event, the event map analysis 216 may display such severity in other ways, such as by color coding locations (e.g., a larger color-coded location in a red color indicates a severe event, a smaller color-coded location in a yellow color indicates a less severe event, and an even smaller color coded location than the yellow color in a green color indicates an even less severe event).

As additionally illustrated in Figure 2, another event device 206-2 has detected another event (e.g., which may be related to the event detected by event device 206-1). For example, while the event device 206-1 may have detected a fire, event device 206-2 may detect smoke associated with the fire, illustrated in the event map analysis 216 as hot spot 218-2. However, the severity of marked hot spot 218-2 is lower than the severity of hot spot 218-1, as indicated by the lower number of concentric circles on the event map analysis 216.

In some examples, the event map analysis 216 can include a heat map 220 of occupant movement. The computing device can utilize, for example, real-time camera feeds from the facility, and in some examples, mobile devices associated with occupants of the facility can transmit information to the computing device. The computing device can generate the event map analysis 216 illustrating the occupant movement utilizing such information.

As illustrated in Figure 2, the heat map 220 can indicate an occupant movement density and/or direction of movement of the occupants based on the direction of and number of concentric ovals. For example, the building system information (e.g., and information from the mobile devices of occupants, if available) may indicate that a medium amount of occupants are currently moving in the facility down the stairs, and the event response analysis can indicate, via the event map analysis, the direction of movement of the occupants (based on the orientation of the concentric ovals pointing down the stairs) and the amount of occupants moving in that area of the facility (e.g., based on the number of concentric ovals). Similar to the marked hot spots 218, a higher number of concentric ovals can indicate a higher number of occupants. Additionally, the event map analysis 216 may display the direction and number of occupants in other ways, such as by utilizing an arrow pointing in a particular direction, and/or color-coding locations (e.g., red as a higher number of occupants, green as a lower number of occupants, yellow as a medium number of occupants), respectively.

In some examples, the heat map 220 of occupant movement can be related to evacuation progress of the occupants of the facility. Accordingly, building managers and/or emergency services personnel can be aware of the progress of evacuation of the facility.

Figure 3 is an example of navigation information on a map of a facility 322 for event system integration for event response, in accordance with one or more embodiments of the present disclosure. The navigation information can include a route 324 and a path 326, as is further described herein.

As previously described in connection with Figure 1, a computing device in the facility can receive building system information from a building management system and emergency services information from mobile devices and/or a remote computing device. The computing device can generate navigation information associated with the facility using the building system information and/or the emergency services information, as is further described herein.

In some examples, an event may be detected at the facility prior to emergency service personnel being dispatched to the facility. For example, an event device may detect a fire, and emergency service personnel can accordingly be dispatched to the facility. As previously described in connection with Figures 1 and 2, a remote computing device and/or mobile devices 314-1 can transmit emergency services information to the computing device. Utilizing the emergency services information, the computing device can generate navigation information including a route 324 for the mobile device 314-1 from a location of the mobile device 314 to a location of the facility. For example, the route 324 can be a route from a location of the mobile device, such as a fire station, to the location of the facility, and can include an estimated time of arrival. The route 324 can be utilized by a driver of a fire engine, ambulance, etc. to locate the facility. Additionally, a building manager may view a real-time location of the mobile device 314-1. In some examples, the mobile device 314-1 may be located in a fire engine, ambulance, etc., and as such, the fire engine/ambulance location can be tracked along the route 324.

In some examples, emergency service personnel may arrive at a facility, and may have to utilize a way to navigate from an initial location at the facility to the location of the event at the facility. The computing device can generate the event response analysis by generating navigation information including a path 326 through the facility 322 for the mobile device 314-2 from a location of the mobile device 314-2 to a location of the event in the facility 322 using the building system information and the emergency services information from the mobile device 314-2. For example, the computing device can utilize building system information (e.g., including floor plans, and/or other building information model data, as well as sensor data) as well as emergency services information (e.g., location of mobile device) to generate a path for the mobile device 314-2 from a current location of the mobile device 314-2 to a location of the event, illustrated in Figure 3 as a hot spot 318-1.

In some examples, the computing device can generate the path 326 that can avoid areas of the facility 322 having an environmental characteristic that exceeds a threshold amount. For example, based on the building system information including an environmental characteristic, such as a smoke concentration, that exceeds a threshold smoke concentration (e.g., illustrated in Figure 3 as hot spot 318-2), the computing device can generate the path 326 that avoids the area of the facility corresponding to the hot spot 318-2. Such a path 326 can be utilized by an emergency service person that avoids the area marked as hot spot 318-2 to safely but also efficiently arrive at the location corresponding to hot spot 318-1. Additionally and/or alternatively, other environmental characteristics included in building system information can be utilized by the computing device to generate the path 326 (e.g., fire, heat, IAQ, etc.)

Accordingly, event system integration for event response according to the disclosure can allow for an event response analysis to be performed and transmitted to mobile devices to provide up to date, accurate, and tailored information about an event as the event evolves. Use of such tailored information can allow emergency service personnel to quickly and efficiently react to an event without having unnecessary information based on their role as emergency service personnel, allowing for a faster and safer approach to event response, as compared with previous approaches.

While the computing device is described above as generating a path 326 utilizing the building system information, embodiments of the present disclosure are not so limited. For example, a mobile device can generate a path through the facility 322 based on connections to various event devices, as is further described in connection with Figure 4.

Figure 4 is an example of navigation information in a system 400 for event system integration for event response, in accordance with one or more embodiments of the present disclosure. The system 400 can include a mobile device 414 and event devices 406. The mobile device 414 can include a user interface 415.

In some examples, a mobile device 414 can determine a path through the facility to a location of an event device 406-5 that has detected an event. Such a path can be determined by the mobile device based on cause and effect logic utilized by the mobile device 414 as is further described herein, and may be utilized in an event in which a computing device of the facility is unable to transmit a path to the mobile device.

As a user of the mobile device 414 enters the facility, the mobile device 414 can wirelessly connect (e.g., via a network relationship) to an event device 406-1 that is proximate to the mobile device 414. When connected, the event device 406-1 can transmit identification information about the event device 406-1 to the mobile device 414. Identification information about the event device 406-1 may include an identifier (e.g., a serial number or other unique identifier). Utilizing the identification information, the mobile device 414 can compare the identifier with predetermined information, including identification information for the event device 406-5 that detected the event. In some examples, such predetermined information can be transmitted to the mobile device 414. The predetermined information may be saved locally at the mobile device 414 and/or may be saved remotely such as at the computing device and can be included in lookup tables.

Accordingly, the mobile device 414 can determine whether the proximate event device 406-1 is the event device that detected the event. In response to the proximate event device 406-1 not being the event device that detected the event, the mobile device 414 can determine a direction of the event device 406-5 (e.g., from the mobile device 414) that detected the event, and a distance (e.g., from the proximate event device 406-1 and/or from the current location of the mobile device 414) to the event device 406-5 that detected the event. The user interface 415 can display the direction and distance. For example, as illustrated in Figure 4, the user interface 415 can display that the event device 406-5 that detected the event is two floors up from the location of the event device 406-1 and/or the location of the mobile device 414.

Accordingly, the user of the mobile device 414 can go up one floor (e.g., from the ground floor to the first floor) and connect with another proximate event device 406-2. Similarly, in response to the event device 406-2 not being the event device 406-5 that detected the event, the user interface 415 can display the event device 406-5 is up one floor from the location of the event device 406-2 and/or the location of the mobile device 414.

The user may again travel up another floor (e.g., to the second floor) and connect with another proximate event device 406-3. In response to the event device 406-3 not being the event device 406-5 that detected the event, the user interface 415 can display the event device 406-5 is 23 meters from the location of the event device 406-2 and/or the location of the mobile device 414 in a particular direction (e.g., to the right, as oriented and displayed in Figure 4). A similar process can be completed as the mobile device 414 connects to event device 406-4. Finally, as the user gets to a proximate location with the event device 406-5, the mobile device 414 can determine that it is connected to the event device 406-5 that detected the event.

Additionally, event system integration for event response according to the disclosure can allow for an event response analysis to be performed and transmitted to mobile devices to provide short, efficient, and safe routes to events within a facility. Such routes can avoid dangerous areas if possible, allowing for a faster and safer approach to event response, as compared with previous approaches.

Figure 5 is an example of a computing device 502 for event system integration for event response, in accordance with one or more embodiments of the present disclosure. As illustrated in Figure 5, the computing device 502 can include a memory 530 and a processor 528 for event system integration for event response, in accordance with the present disclosure.

The memory 530 can be any type of storage medium that can be accessed by the processor 528 to perform various examples of the present disclosure. For example, the memory 530 can be a non-transitory computer readable medium having computer readable instructions (e.g., executable instructions/computer program instructions) stored thereon that are executable by the processor 528 for event system integration for event response in accordance with the present disclosure.

The memory 530 can be volatile or nonvolatile memory. The memory 530 can also be removable (e.g., portable) memory, or non-removable (e.g., internal) memory. For example, the memory 530 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 530 is illustrated as being located within computing device 502, embodiments of the present disclosure are not so limited. For example, memory 530 can also be located internal to another computing resource (e.g., enabling computer readable instructions to be downloaded over the Internet or another wired or wireless connection).

The processor 528 may be a central processing unit (CPU), a semiconductor-based microprocessor, and/or other hardware devices suitable for retrieval and execution of machine-readable instructions stored in the memory 530.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (102, 502) for event system integration for event response, comprising:
a memory (530); and
a processor (528) configured to execute executable instructions stored in the memory (530) to:
receive building system information from a building management system (104) of a facility (322) and emergency services information from at least one of a mobile device (114, 314, 414) and a remote computing device (112);
determine whether an event has been detected via an event device (106, 206, 406) in the facility (322) from the building system information;
generate an event response analysis using at least one of the building system information based on the detected event and the emergency services information; and
transmit the event response analysis to the mobile device (114, 314, 414).

2. The computing device (102, 502) of claim 1, wherein generating the event response analysis includes generating an event map analysis (216) that is associated with the event for the facility (322) using the building system information.

3. The computing device (102, 502) of claim 1, wherein generating the event response analysis includes generating a physiological data analysis for a user associated with the mobile device (114, 314, 414) using the emergency services information, wherein the user is an emergency service person responding to the event.

4. The computing device (102, 502) of claim 1, wherein generating the event response analysis includes generating an impact detection analysis for a user associated with the mobile device (114, 314, 414) using the emergency services information in response to the mobile device (114, 314, 414) detecting an impact, wherein the user is an emergency service person responding to the event.

5. The computing device (102, 502) of claim 1, wherein generating the event response analysis includes generating navigation information associated with the facility (322) using at least one of the building system information and the emergency services information.

6. The computing device (102, 502) of claim 1, wherein:
the mobile device (114, 314, 414) is one of a plurality of mobile devices (114, 314, 414) each associated with an emergency service person responding to the event;
the computing device (102, 502) is configured to receive the emergency services information from the plurality of mobile devices (114, 314, 414); and
generating the event response analysis includes determining a count of mobile devices (114, 314, 414) of the plurality of mobile devices (114, 314, 414) at the facility (322) and a location of each of the plurality of mobile devices (114, 314, 414) at the facility (322).

7. The computing device (102, 502) of claim 1, wherein generating the event response analysis includes determining a criticality of a space in the facility (322) using the building system information and the emergency services information from the mobile device (114, 314, 414) for evacuation determination.

8. The computing device (102, 502) of claim 1, wherein generating the event response analysis includes providing a connection to a public address/voice alarm (PA/VA) system of the facility (322) for the mobile device (114, 314, 414).

9. The computing device (102, 502) of claim 1, wherein generating the event response analysis includes providing a connection to a camera feed to the facility (322).

10. The computing device (102, 502) of claim 1, wherein the processor (528) is configured to execute the instructions to transmit a portion of the event response analysis to the mobile device (114, 314, 414) based on a permission level of an identity associated with a user of the mobile device (114, 314, 414).

11. A non-transitory computer readable medium having computer readable instructions stored thereon that are executable by a processor (528) to:
receive building system information from a building management system (104) of a facility (322) and emergency services information from at least one of a plurality of mobile devices (114, 314, 414) and a remote computing device (112);
determine whether an event has been detected via an event device (106, 206, 406) in the facility (322) from the building system information;
generate an event response analysis using at least one of the building system information based on the detected event and the emergency services information; and
transmit a portion of the event response analysis to sub-group of the plurality of mobile devices (114, 314, 414) based on permission levels of identities associated with users of the plurality of mobile devices (114, 314, 414).

12. The computer readable medium of claim 11, wherein the non-transitory computer readable instructions are executable by the processor (528) to:
transmit the portion of the event response analysis to a first sub-group of the plurality of mobile devices (114, 314, 414) based on identities associated with users of the first sub-group having a first permission level; and
transmit another portion of the event response analysis to a second sub-group of the plurality of mobile devices (114, 314, 414) based on identities associated with users of the second sub-group having a second permission level, wherein the second permission level is different from the first permission level.

13. The computer readable medium of claim 11, wherein the event response analysis includes contact information associated with each mobile device (114, 314, 414) of the plurality of mobile devices (114, 314, 414).

14. The computer readable medium of claim 11, wherein the event response analysis includes building plans for the facility (322) from the building system information.

15. The computer readable medium of claim 11, wherein the non-transitory computer readable instructions are executable by the processor (528) to:
determine whether the event has been detected by verifying, in response to a signal being received, an alarm state of the event device (106, 206, 406); and generate the event response analysis in response to the alarm state being verified.
